**Europäisches Patentamt**

**European Patent Office**

**Office européen des brevets**

(11) Veröffentlichungsnummer: **0 021 163**
**A1**

## EUROPÄISCHE PATENTANMELDUNG

(21) Anmeldenummer: **80103115.4**

(22) Anmeldetag: **04.06.80**

(51) Int. Cl.³: **G 08 B 13/18**, G 01 V 9/04, F 16 P 3/14

(30) Priorität: **09.06.79 DE 2923433**

(43) Veröffentlichungstag der Anmeldung: **07.01.81**
**Patentblatt 81/1**

(84) Benannte Vertragsstaaten: **AT CH FR GB IT LI NL SE**

(71) Anmelder: **Firma Carl Zeiss, Postfach 1369/1380, D-7082 Oberkochen (DE)**

(72) Erfinder: **Haag, Günter, Dr.Dipl.-Phys. Hessenlauweg 10 B, D-7000 Stuttgart 80, DE (DE)**

(54) **Einbruchsicherung von Flächen.**

(57) Einbruchsicherung für Flächen, bei der der Rand der zu schützenden Fläche (1) mit lichtreflektierenden Schichten (2, 3) versehen ist, die das von einer Lichtquelle (4) ausgehende Licht zu einem Empfänger (5) leiten und bei der bei Beeinflussung dieses Lichtes Alarm ausgelöst wird. Um die Sicherung justierunempfindlich zu machen, sind die lichtreflektierenden Schichten (2, 3) aus Elementen gebildet, die einen auftreffenden Lichtstrahl (18, 19) unabhängig von ihrer Winkelstellung in der durch die Schichten (2, 3) aufgespannten Ebene parallel zu seiner Einfallsrichtung reflektieren. Diese Elemente sind als Spiegelleisten ausgebildet, die 90°-Winkelspiegel oder 90°-Prismen als reflektierende Elemente enthalten. Mehrere solcher Spiegel oder Prismen können in einer Spiegelleiste zusammengefaßt sein.

Die Einbruchsicherung findet Anwendung zur Sicherung von Flächen, wie z. B. Fenstern, zur Sicherung von Maschinen und zur Sicherung von Freiland-Flächen. Insbesondere für den zuletzt genannten Verwendungszweck ist die Einbruchsicherung transportabel aufgebaut.

ACTORUM AG

- 1 -

## Einbruchsicherung für Flächen

Die vorliegende Erfindung betrifft eine Einbruchsicherung für Flächen, bei der der Rand der zu schützenden Fläche mit lichtreflektierenden Schichten versehen ist, die das von einer Lichtquelle ausgehende Licht zu einem Empfänger leiten und bei der bei Beeinflussung dieses Lichtes Alarm ausgelöst wird.

Eine solche Einbruchsicherung ist aus der DE-PS 23 53 702 bekannt. Die lichtreflektierenden Schichten sind bei dieser Einbruchsicherung als ebene Spiegelflächen ausgebildet, die in einem Verbundsystem, beispielsweise zwischen den Scheiben eines Fensters angeordnet sind. Die Justieranforderungen halten sich in diesem Falle in Grenzen, da die Scheiben Licht, das aus der Vertikalen abweicht total reflektieren und damit wieder auf die Spiegelflächen lenken.

Der Justieraufwand wird jedoch ungleich höher, wenn die Einbruchsicherung dazu verwendet werden soll unverglaste Flächen zu sichern. Da das reflektierte Licht um den doppelten Winkel der Spiegelfläche abgelenkt wird, wirken sich auch kleine Winkelfehler zwischen den Spiegelflächen sehr nachteilig auf die Intensität des empfangenen Lichtes aus, genauso wie ein seitlicher Versatz der Spiegelflächen.

Es ist nun das Ziel der vorliegenden Erfindung eine Einbruchsicherung der beschriebenen Art zu schaffen, die bei vielseitiger Einsatzmöglichkeit praktisch keine Justierprobleme mit sich bringt und die preiswert ist.

Die Aufgabe wird gemäß der Erfindung dadurch gelöst, daß die lichtreflektierenden Schichten aus Elementen gebildet sind, die einen auftreffenden Lichtstrahl unabhängig von ihrer Winkelstellung in der durch die Schichten aufgespannten Ebene parallel zu seiner Einfallsrichtung reflektieren.

Damit ist erreicht, daß sich Winkelfehler zwischen den lichtreflektierenden Elementen nicht mehr nachteilig auf die Intensität des empfangenen Lichtes und damit auf die Empfindlichkeit der Sicherung auswirken. Der Justieraufwand bei der Montage der Einbruchsicherung kann also sehr klein gehalten werden.

Es ist vorteilhaft die lichtreflektierenden Schichten aus prismenförmigen Elementen zu bilden, die entlang gegenüberliegender Ränder der zu schützenden Fläche verlaufen. Um den Montageaufwand und die Materialkosten möglichst niedrig halten zu können, wird jede lichtreflektierende Schicht von einer Spiegelleiste aus optisch durchlässigem Material gebildet, die aus einer Mehrzahl parallel zueinander und zur Längsrichtung verlaufender Furchen besteht, von denen jede die Form eines $90^{\circ}$-Prismas hat. Ein durch die Basisfläche eines solchen Prismas eindringender Lichtstrahl wird von den Seitenflächen so reflektiert, daß er parallel versetzt in der durch die Leisten aufgespannten Ebene in seiner Einfallsrichtung zurückläuft.

Es ist auch möglich die lichtreflektierenden Schichten aus $90^{\circ}$-Winkelspiegeln zu bilden, die entlang gegenüberliegender Ränder der zu schützenden Fläche verlaufen. Auch hier ist es vorteilhaft jede lichtreflektierende Schicht aus einer Spiegelleiste zu bilden, die aus einer Mehrzahl parallel zueinander und zur Längsrichtung verlaufender Furchen besteht, von denen jede die Form eines $90^{\circ}$-Winkelspiegels hat. Solche Spiegelleisten können aus einem Werkstoff bestehen, der das verwendete Licht möglichst vollständig reflektiert, sie können jedoch auch aus einem

anderen, leichter zu verarbeitenden Werkstoff, z.B. Kunststoff bestehen, wobei die zur Lichtreflexion dienenden Flächen verspiegelt sind.

Bei der Einbruchsicherung nach der Erfindung wird als Lichtquelle vorteilhaft eine im Infrarot arbeitende lichtemittierende Diode verwendet. Diese Lichtquelle wird moduliert. Zur Alarmauslösung kann die Änderung der Phasenbeziehung zwischen dem eingestrahlten und dem empfangenen Signal dienen. Es ist auch möglich eine Intensitätsänderung des empfangenen Signals zur Alarmauslösung zu verwenden.

In der vorliegenden Beschreibung ist stets von Licht die Rede, das von den lichtreflektierenden Schichten von einer Quelle zum Empfänger geleitet wird. Der Ausdruck Licht ist in diesem Zusammenhang als Sammelbegriff für elektromagnetische Strahlung zu verstehen, d.h. für die beschriebene Einbruchsicherung kann elektromagnetische Strahlung beliebiger, dem jeweiligen Problem angepaßter Wellenlänge Verwendung finden.

Die Einbruchsicherung nach der Erfindung ist natürlich auch einem gewissen Alterungsprozeß unterworfen, in dessen Verlauf sich normalerweise die Intensität des empfangenen Signals langsam vermindert. Um diesen Effekt unwirksam zu machen und um auch Störungen vom Alarmfall unterscheiden zu können, wird zweckmäßig dem Lichtempfänger eine Anordnung nachgeschaltet, die das empfangene Signal über verschiedene Zeiten aufintegriert, die so gewonnenen Signale vergleicht und bei einer vorgegebenen Abweichung Alarm auslöst.

Um zu vermeiden, daß die Spiegelleisten, insbesondere bei Verwendung im Freien durch Staubablagerung in ihrer Wirkung beeinträchtigt werden, können sie vertikal angeordnet werden.

Die neue Einbruchsicherung arbeitet mit Mehrfachreflexionen an den Spiegelleisten, d.h. von der Lichtquelle wird Licht in einem vorgegebenen Winkelbereich ausgestrahlt und vom Empfänger wird Licht aus einem vergleichbaren Winkelbereich empfangen. Dazu werden vorteilhaft vor der Lichtquelle und vor dem Empfänger Linsen, beispielsweise Zylinderlinsen angeordnet, welche den entsprechenden Winkelbereich definieren. Es bil-

det sich über die zu schützende Fläche ein Lichtvorhang aus, dessen Beeinflussung von außen zum Alarmfall führt.

Die Einbruchsicherung kann zur Sicherung verglaster Fenster oder freier, d.h. unverglaster Flächen verwendet werden.

Besonders vorteilhaft ist es die Spiegelleisten auf transportablen Trägern anzubringen. Dies ermöglicht es eine Sicherung von Freiland-flächen schnell und ohne großen Aufwand aufzubauen. Die zu sichernden Flächen können beispielsweise aus dem militärischen Bereich oder aus dem Bereich der Reaktorsicherheit stammen. Die neue Einbruchsicherung kann beispielsweise auch in Gefängnissen als Ausbruchsicherung verwendet werden.

Eine weitere Einsatzmöglichkeit liegt auf dem Bereich der Maschinen-Sicherung, z.B. der Sicherung von Stanzmaschinen. Es läßt sich auch eine Maschinensteuerung aufbauen, beispielsweise eine Zählung von Werkstücken oder eine Schnellabschaltung von Maschinen.

Weitere Einsatzgebiete sind denkbar und möglich, sollen hier jedoch nicht im einzelnen angeführt werden.

Die Erfindung wird im folgenden anhand der Figuren 1 bis 6 der beigefügten Zeichnungen näher erläutert. Im einzelnen zeigen:

Fig. 1    eine Prinzipskizze eines Ausführungsbeispiels;
Fig. 2    eine Spiegelleiste in perspektivischer Darstellung;
Fig. 3    einen Schnitt durch eine 90°-Winkelspiegel-Leiste;
Fig. 4    einen Schnitt durch eine 90°-Prismen-Leiste;
Fig. 5    ein Ausführungsbeispiel für die Befestigung einer Spiegelleiste;
Fig. 6    ein Ausführungsbeispiel für eine Freiland-Sicherung.

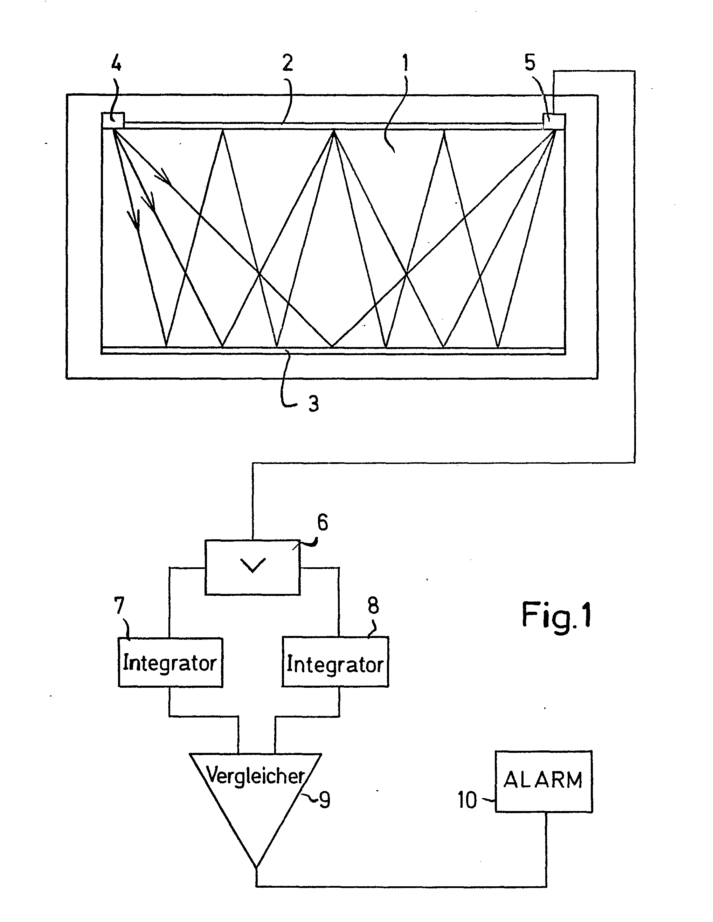

In Fig. 1 ist mit 1 eine zu sichernde Fläche, beispielsweise ein Fenster bezeichnet. Entlang des oberen und unteren Rahmens sind Spiegelleisten 2 und 3 angeordnet. Das von einer Lichtquelle 4, beispielsweise einer infrarot-emittierenden Diode in einen vorbestimmten Winkelbereich ausgestrahlte Licht wird von den Leisten 2 und 3 mehrfach reflektiert und gelangt schließlich zu einem Empfänger 5.

Die Verteilung der Intensität auf die als Beispiel dargestellten Licht- wege hängt von den Absorptionseigenschaften des Materials, welches das Licht durchquert, von der Abstrahlungscharakteristik der Lichtquelle 4, dem Reflexionskoeffizienten der Spiegelschichten 2, 3 und der Geometrie der Anordnung ab. Das vom Empfänger 5 aufgenommene Signal ist ein Summensignal, zu dem die über die verschiedenen Wege laufenden Teilstrahlen beitragen.

Das vom Empfänger 5 aufgenommene Signal wird einem Verstärker 6 und von dort zwei Integratoren 7 und 8 zugeleitet. Der Integrator 7 integriert das Signal über einen Zeitraum von ca. 10 Sekunden auf, der Integrator 8 hat eine wesentlich niedrige Integrationszeit. Beide integrierten Signa- le werden einem Vergleicher 9 zugeleitet. Dieser vergleicht das Signal von 8 mit dem vom Integrator 7 gelieferten Signal als Bezugssignal. Bei einem vorgegebenen Differenzwert wird über die Einheit 10 Alarm ausge- löst.

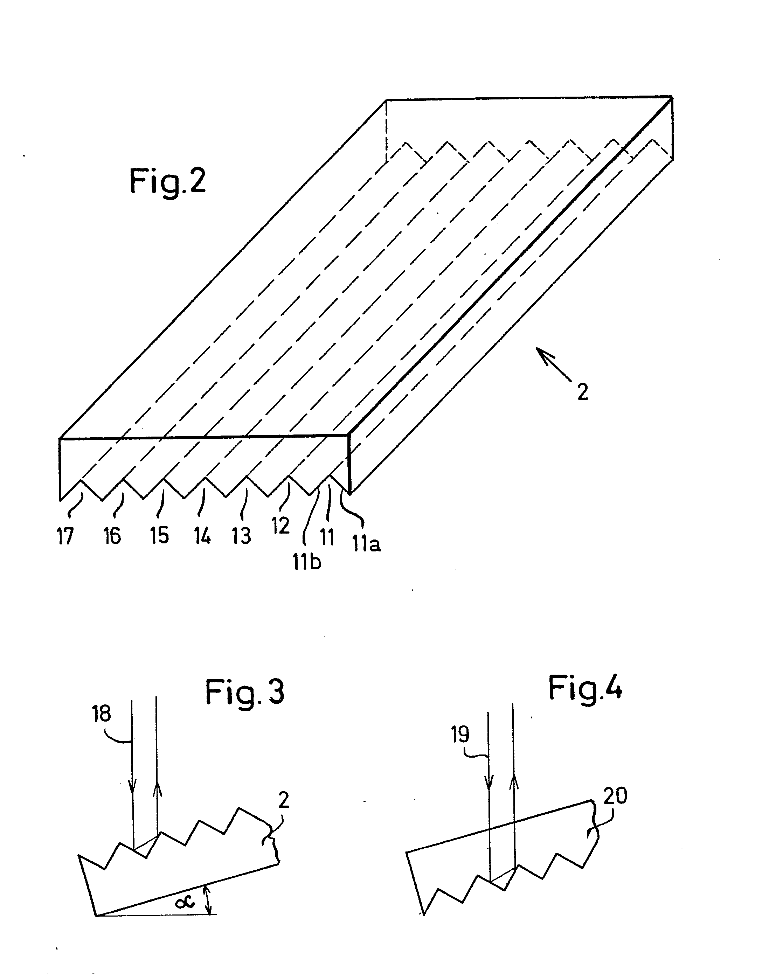

Die Spiegelleisten 2 und 3 müssen nicht sehr sorgfältig justiert werden. Fig. 2 zeigt eine solche Leiste 2 in perspektivischer Ansicht. Sie besteht aus mehreren, parallel zueinander und parallel zur Längsrichtung der Leiste verlaufenden Furchen 11-17. Jede einzelne Furche stellt einen $90^o$-Winkelspiegel dar, dessen Spiegelflächen für die Furche 11 mit 11a und 11b bezeichnet sind.

Fig. 3 zeigt einen Schnitt durch die Spiegelleiste 2, wobei angenommen ist, daß diese infolge schlechter Justierung einen Winkel $\alpha$ mit der Ho- rizontalen bildet. Dieser Winkel ist bei einwandfreier Justierung $0^o$. Ein Lichtstrahl 18, der in der von den Leisten 2, 3 aufgespannten Ebene verläuft, verläuft auch nach der Reflexion in dieser Ebene, nur etwas parallel versetzt.

Fertigt man die Spiegelleiste der Fig. 2 aus durchsichtigem Material und ordnet man sie so an, daß ihre plane Rückseite der Fläche 1 zuge- kehrt ist, so erhält man eine Spiegelleiste, die Fig. 4 im Schnitt zeigt. Ein Lichtstrahl 19 dringt in das optisch dichtere Medium der Leiste 20 ein, ehe er an den Prismenflächen der 90°-Prismen reflektiert wird. Da hier die Reflexion im Inneren eines optisch dichteren Mediums an einer Fläche gegen ein optisch dünneres Medium (Luft) erfolgt, ist der Einfallswinkel größer als der Grenzwinkel der Totalreflexion, so daß eine Reflexion an den Prismenflächen erfolgt ohne daß diese verspiegelt sein müssen.

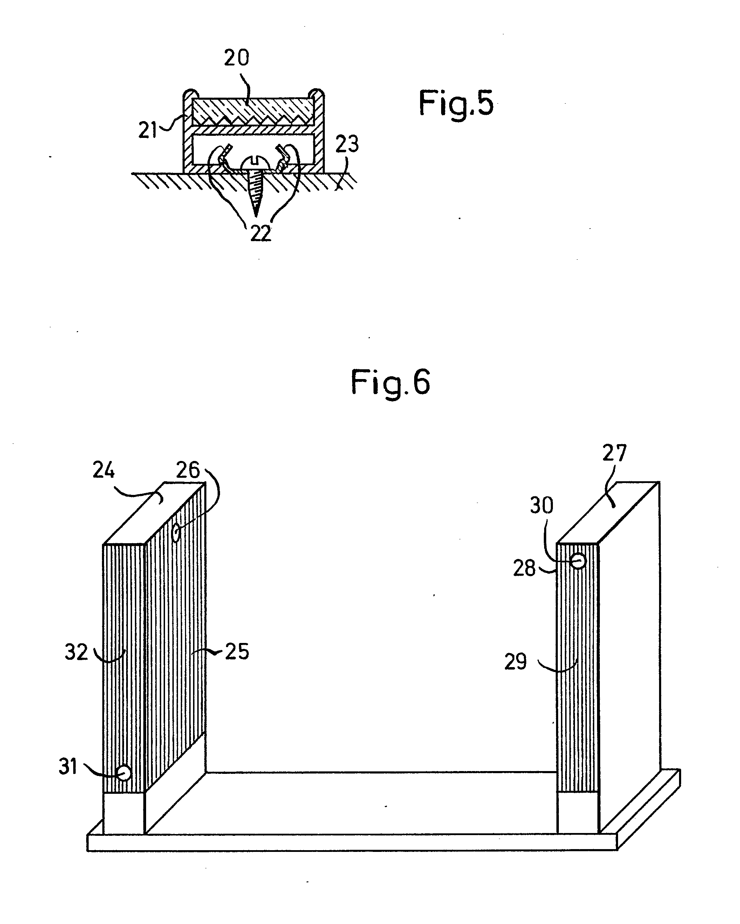

Fig. 5 zeigt eine Vorrichtung zur Montage einer Spiegelleiste 20. Diese ist in einen Halter 21 eingeschoben, der über federnde Elemente 22 mit einer Unterlage 23 verbunden ist. Im Prinzip sind eine Vielzahl von Befestigungen für die Spiegelleisten beispielsweise auch eine Befestigung durch Ankleben denkbar.

Fig. 6 zeigt einen Träger 24, dessen vertikale Seitenflächen 25 und 32 mit Spiegelleisten versehen sind. Im Abstand vom Träger 24 ist ein zweiter Träger 27 mit Spiegelflächen 28 und 29 angeordnet. Eine Lichtquelle 26, vorzugsweise ein Laser erzeugt Licht, das nach Reflexion an den Spiegelleisten 25, 28 auf einen Empfänger im Träger 27 fällt, der in der gewählten Darstellung nicht sichtbar ist. Dieser Empfänger kann auch im Träger 24 untergebracht sein. Das vom Empfänger gemessene Signal kann einer elektronischen Anordnung nach Art der Fig. 1 zugeführt werden, so daß Alarm ausgelöst wird, wenn der zwischen den Trägern 24, 27 ausgebildete Lichtvorhang störend beeinflußt wird.

Es ist auch möglich das Licht vom Empfänger im Träger 27 über Lichtleitfasern einem Sender 30 zuzuführen. Vor der Zeichenebene ist ein weiterer Träger zu denken, der eine Spiegelleiste aufweist die mit der Leiste 29 zusammenwirkt. Ordnet man Träger der dargestellten Art an den Eckpunkten eines Rechtecks an, so lassen sich gleichzeitig vier Flächen sichern, wobei dann die Alarmschaltung mit dem Empfänger 31 des Trägers 24 verbunden ist.

Patentansprüche

1. Einbruchsicherung für Flächen, bei der der Rand der zu schützenden Fläche mit lichtreflektierenden Schichten versehen ist, die das von einer Lichtquelle ausgehende Licht zu einem Empfänger leiten und bei der bei Beeinflussung dieses Lichts Alarm ausgelöst wird, dadurch gekennzeichnet, daß die lichtreflektierenden Schichten (2,3) aus Elementen gebildet sind, die einen auftreffenden Lichtstrahl (18,19) unabhängig von ihrer Winkelstellung in der durch die Schichten aufgespannten Ebene parallel zu seiner Einfallsrichtung reflektieren.

2. Einbruchsicherung nach Anspruch 1, dadurch gekennzeichnet, daß die lichtreflektierenden Schichten (2,3) von prismenförmigen Elementen gebildet sind, die entlang gegenüberliegender Ränder der zu schützenden Fläche (1) verlaufen.

3. Einbruchsicherung nach Anspruch 1, dadurch gekennzeichnet, daß die lichtreflektierenden Schichten von 90°-Winkelspiegeln gebildet sind, die entlang gegenüberliegender Ränder der zu schützenden Fläche (1) verlaufen.

4. Einbruchsicherung nach Anspruch 1 und 3, dadurch gekennzeichnet, daß jede lichtreflektierende Schicht von einer Spiegelleiste (2) gebildet ist, die aus einer Mehrzahl parallel zueinander und zur Längsrichtung verlaufender Furchen (11-17) besteht, von denen jede die Form eines 90°-Winkelspiegels hat.

5. Einbruchsicherung nach Anspruch 1 und 2, dadurch gekennzeichnet, daß jede lichtreflektierende Schicht von einer Spiegelleiste (20) aus optisch durchlässigem Material gebildet ist, die aus einer Mehrzahl parallel zueinander und zur Längsrichtung verlaufender Furchen besteht, von denen jede die Form eines 90°-Prismas hat.

6. Einbruchsicherung nach Anspruch 1, dadurch gekennzeichnet, daß dem Empfänger (5) des reflektierten Lichtes eine Anordnung (6-10) nachgeschaltet ist, die das Signal über verschiedene Zeiten aufintegriert,

die so gewonnenen Signale vergleicht und bei einer vorgegebenen Abweichung Alarm auslöst.

7. Einbruchsicherung nach Anspruch 1, dadurch gekennzeichnet, daß die Lichtreflektierenden Schichten entlang den vertikal verlaufenden Rändern der zu schützenden Fläche angeordnet sind.

8. Einbruchsicherung nach Anspruch 4 oder 5, dadurch gekennzeichnet, daß die Spiegelleisten auf transportablen Trägern (24,27) angebracht sind.

9. Einbruchsicherung nach Anspruch 1 und 8, gekennzeichnet durch die Verwendung zur Sicherung von Freiland-Flächen.

10. Einbruchsicherung nach Anspruch 1 und einem oder mehreren der folgenden, gekennzeichnet durch die Verwendung zur Maschinen-Sicherung und/oder -Steuerung.

Fig.1

Fig.2

17  16  15  14  13  12  11  11a
              11b

2

Fig.3

18

2

∝

Fig.4

19

20

Fig.5

20

21

23

22

Fig.6

24 26

27

30

28

32 25

29

31

**Europäisches Patentamt**

**EUROPÄISCHER RECHERCHENBERICHT**

0021163

Nummer der Anmeldung

EP 80 10 3115

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | SHEET METAL INDUSTRIES, Band 34, Nr. 367, November 1957, Redhill Surrey - Vereinigte Königreich, "Press guarding by electronics", Seiten 813-817<br><br>* Seite 814, linke Spalte, Zeile 44 bis Seite 815, linke Spalte, Zeile 26; Figur 4 * | 1,2,4, 5,7,10 |
| X | ELECTRONIQUE INDUSTRIELLE, Nr. 87, Oktober 1965, Paris, FR, G. PENNISI: "Une barrière électronique pour machines-outils", Seite 423<br><br>* Seite 423, linke Spalte, Zeilen 1-17; Mittelspalte, Zeilen 16-22; Figur 1 * | 1,3,4, 7,10 |
| X | DE - C - 765 353 (H. RICHTER)<br>* Seite 1, Zeile 1 bis Seite 2, Zeile 77; Seite 2, Zeile 102 bis Seite 3, Zeile 7 * | 1,2,7, 10 |

**KLASSIFIKATION DER ANMELDUNG (Int. Cl.³)**

G 08 B 13/18
G 01 D 21/04
F 16 P 3/14

**RECHERCHIERTE SACHGEBIETE (Int. Cl.³)**

G 08 B 13/18
G 01 D 21/04
F 16 P 3/14

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 15-09-1980 | ORNELIS |

EPA form 1503.1   06.78